# EUROPEAN PATENT APPLICATION

(11) **EP 4 603 455 A1**
(43) Date of publication of application: **20.08.2025**
(21) Application number: 24305267.7
(22) Date of filing: 15.02.2024
(51) Int. Cl.: C01B 37/00, C01B 39/00

(54) **PROCESS FOR THE SYNTHESIS OF ZEOLITIC IMIDAZOLATE FRAMEWORKS**

(71) Applicant: Fundació Institut Català de Nanociència i Nanotecnologia (ICN2), 08193 Cerdanyola del Vallès (Barcelona) (ES); Institució Catalana de Recerca i Estudis Avançats, 08010 Barcelona (ES); Centre National de la Recherche Scientifique, 75016 Paris (FR); Mof Apps AS, 0873 Oslo (NO); UNIVERSITE CLAUDE BERNARD - LYON 1, 69100 Villeurbanne (FR)
(72) Inventor: MASPOCH COMAMALA, Daniel, 08197 VALLDOREIX (ES); IMAZ GABILONDO, Inhar, 08240 MANRESA (ES); FARRUSSENG, David, 69380 BELMONT D'AZERGUES (FR); SEIDENADER, Nik, 80638 MÜNCHEN (DE)
(74) Representative: ZBM Patents - Zea, Barlocci & Markvardsen

(57) **Abstract**

The present disclosure refers to a process for the preparation of a dry crystalline zeolitic imidazolate framework (ZIF) which comprises: a) spray drying a metal oxide and an imidazole ligand in the presence of a solvent, wherein the reaction of the metal oxide with the imidazole ligand to yield the ZIF and the drying of the obtained ZIF take place simultaneously inside the spray dryer, and b) collecting the formed dry crystalline ZIF.

## Description

### Technical Field

The present invention is related to the field of metal organic chemistry. The invention provides a method for large-scale industrial synthesis of zeolitic imidazolate frameworks.

### Background Art

Metal organic frameworks, also termed MOFs, form an interesting class of microporous or mesoporous substances having characteristics which allow their use in many technical fields, such as gas storage, separation or controlled release of chemical substances, catalysis and drug delivery. These potential applications are a direct consequence of the porous architecture of MOFs, which leads to high specific surface area of these materials.

MOFs are composed of two major components: a metal ion or cluster of metal ions and an organic molecule that plays the role of a ligand. The organic units are typically di-, tri- or polydentate ligands. The choice of metal and organic ligand has significant effects on the structure and properties of the MOF. For example, the metal coordination preference influences the size and shape of pores by dictating how many ligands can bind to the metal and in which orientation.

In particular, zeolitic imidazolate frameworks, also termed ZIF-type MOFs or ZIFs, are a relatively new class of metal-organic frameworks (MOFs) that are topologically isomorphic with zeolites. This family of MOFs includes ZIF-8, ZIF-4, ZIF-7, ZIF-14 and MAF-6. They are characterized by high microporosity, exceptional chemical and thermal stability (up to 400 °C), and large surface area. There are numerous known applications for ZIFs, and more yet to be discovered. The most studied applications include: CO₂ storage and separation, hydrocarbon gas separation, air purification, particularly VOC adsorption, controlled release of active ingredients, and supercapacitor electrode materials. The diverse industrial applications have boosted the demand for these ZIF materials. Unfortunately, most methods disclosed for their preparation are not scalable.

One scalable process for the production of MOFs in general was disclosed in EP2764004. Said process comprises spray drying a metal ion and an organic ligand which is at least bidentate into a spray dryer in the presence of a solvent. Reaction times needed for the synthesis of MOFs are thereby greatly reduced and dry crystalline MOFs, such as HKUST-1 and other Cu-based MOFs, are provided directly out of the initial liquid reagents. The process has the advantage of being continuous and allows for the recovery of the material without filtration.

Despite this being a huge advance in the field, the spray-drying method is not so straight forward for all MOF families in practical terms. Specifically concerning ZIFs, the process disclosed in the prior art involves the use of metal salts, particularly metal nitrates, which require an aqueous phase washing, resulting in re-suspension and ultimately slow filtration. This hinders the large-scale production of ZIFs, such that, to date, there is no industrial production of ZIF materials.

Thus, even though considerable improvements have been made in the preparation of MOFs at industrial conditions, there is still a need to improve said methods, especially in the context of producing ZIF-type MOFs.

### Summary of Invention

The shortcomings mentioned above have been solved by the inventors by developing a more efficient process for synthesizing industrially scalable porous materials of the ZIF type which does not need washing and filtration steps.

A first aspect of the disclosure refers to a process for the preparation of a dry crystalline zeolitic imidazolate framework (ZIF) which comprises:
a) spray drying a metal oxide and an imidazole ligand in the presence of a solvent, wherein the reaction of the metal oxide with the imidazole ligand to yield the ZIF and the drying of the obtained ZIF take place simultaneously inside the spray dryer, and
b) collecting the formed dry crystalline ZIF.

The inventors have surprisingly found that using a metal oxide in the spray drying process instead of a metal salt, such as a nitrate, allows for the direct synthesis of ZIF materials, without any additional chemicals and without the need for aqueous phase washing and subsequent filtration steps. This greatly improves the efficiency of the process, resulting in a low-cost, time efficient synthesis method that allows the production of high-quality ZIFs at a competitive price. Moreover, the synthesis may be carried out using water as solvent, which brings about substantial benefits in terms of absence of toxicity, reduced environmental hazards and reduced cost. The process is therefore far more efficient, environmentally friendly and economical.

As shown in the example below, dry crystalline ZIF-8 was directly obtained on an industrial-scale atomizer with the herein disclosed process without the need of any washing, filtration and/or further purification steps with water as a solvent. The process is directly applicable for obtaining other ZIFs, such as, for example, ZIF-4, ZIF-7, ZIF-14 and MAF-6.

In a second aspect, the disclosure provides a dry crystalline ZIF obtainable by a process as defined in the first aspect.

### Detailed description of the invention

All terms as used in this application, unless otherwise stated, shall be understood in their ordinary meaning as known in the art. Other more specific definitions for certain terms as used in the present application are as set forth below and are intended to apply uniformly through-out the specification and claims unless an otherwise expressly set out definition provides a broader definition.

As used herein, the indefinite articles "a" and "an" are synonymous with "at least one" or "one or more." Unless indicated otherwise, definite articles used herein, such as "the" also include the plural of the noun.

"Zeolitic imidazolate frameworks" (ZIFs) comprise metal ions (usually transition metal ions such as Zinc or Cobalt) and imidazolate (Im) linkers in tetrahedral coordination surrounded by nitrogen atoms from the five-membered imidazole ring serving as a bridging linker, i.e. a link connecting the metal centers in the three-dimensional framework. The crystal structures of ZIFs share the same topologies as those that can be found in aluminosilicate zeolites. ZIFs have advantages over zeolites such that the hybrid framework structures are expected to have more flexibility in surface modification. Due to their interesting properties such as high porosity, high surface area, exceptional thermal and chemical stability, ZIFs are very attractive materials with potential applications.

A "spray dryer" is a device well known in the state of the art where a liquid input stream is sprayed in small droplets through a nozzle (or atomizer) into a hot gas stream. The term "spraying" (also known as atomizing) refers to the process of forming a spray, which is a dynamic collection of drops dispersed in a gas. Spray-drying is based on atomization of a feed solution into aerosol droplets that are subsequently brought into contact with each other and suspended within a hot gas stream, which induces solvent evaporation. The dried particles are transported to a collector, generally located at the bottom of a gas-stream cyclone generated by an aspirator located down-stream of the outlet filter. This arrangement prevents particles from entering the exhaust gas. Importantly, the whole process can be run continuously in a closed loop, which is advantageous both technically and environmentally.

The spray-drying synthesis of coordination compounds, such as MOFs, relies on the formation and further drying of micrometric droplets containing the metal ion and the organic linker. Rapid evaporation of the solvent induces formation, at the air-liquid interface, of MOF nanocrystals that, upon drying, accumulate and merge into compact/hollow, often spheroid MOF. Although the aforementioned general approach is very wide in scope, some products require major adaptations for efficient synthesis.

In particular, as outlined above, the production of ZIFs in industrial scale by conventional spray-drying is limited by the need to use of metal salts, usually metal nitrates, which require an aqueous phase washing, resulting in re-suspension and ultimately slow filtration, all of which hinders large-scale production. This problem has been solved by the present inventors by using metal oxides instead of metal salts in the spray-drying process, as disclosed in the first aspect. Surprisingly, this allows to dispense with all the washing and downstream purification steps.

The process disclosed herein additionally maintains all the advantages of the spray-drying synthesis process. As compared to other ZIF production processes, the process of the invention greatly reduces the reaction time needed for the synthesis of ZIF. The process of the first aspect also has the advantage that it directly produces dry crystalline ZIF out of the initial liquid reagents at mild conditions which can be performed in regular industrial spray dryer devices. Thus, the process of the first aspect produces large quantities of dry ZIF crystals in a very short time. Further, the process can be applied to a continuous or semi-continuous flow production process. The reagents can be continuously sprayed at the top of the spray drying apparatus while the newly formed crystals fall to the bottom and can be collected in the drum.

Typically, the raw product is obtained as a dry powder containing small ZIF crystals, although it may also be obtained as agglomerate. As crystals are formed inside the spray dryer and fall to the bottom, new reactants are sprayed and the product is continuously produced. The only limitation of the process is the capacity of the drum, and even then, the process needs to be stopped only time enough for the drum to be emptied. Furthermore, this limitation can be eradicated by installing a continuous unloading system for the drum.

The crystals directly obtained by the process of the invention may have a purity up to 99% (w/w), for example a purity of 70%, 71%, 72%, 73%, 74%, 75%, 76%, 77%, 78%, 79%, 80%, 81%, 82%, 83%, 84%, 85%, 86%, 87%, 88%, 89%, 90%, 91%, 92%, 93%, 94%, 95%, 96%, 97%, 98%, or 99% (w/w). The expression "% w/w" refers to percentage by weight of a compound with respect to the total weight of the composition. Additional washing, filtering and drying steps are not required but may be performed if wishing to increase the purity of the obtained ZIF. Further, ZIF crystals obtained by the present process have particularly small dimensions. The the small size of the ZIF crystals obtainable by the process of the invention can provide special properties, for example, for gas sorption applications.

ZIFs are particular materials in that they are highly porous. Importantly, the ZIFs obtained have a high specific surface area. The specific surface area may be measured by the Brunauer-Emmett-Teller (also known as BET) method. As shown in the example below, the specific surface area as measured BET method for the ZIF-8 obtained by the process of the invention is very high.

The process of the invention thus provides for the short-time, large-scale production of ZIFs with yields comparable to previously known processes. This is a versatile and tunable process that can provide micrometer spherical beads/superstructures. Altogether, the present invention provides an efficient, convenient and economical process for use in industrial ZIF preparation.

The process of the first aspect thus requires a metal ion provided by a metal oxide or metal hydroxide. The metal ion coordinates with imidazole ligand to form the ZIF crystal structure. In one embodiment, the metal is a divalent metal, for example, a divalent metal selected from the group consisting of Zn²⁺, Co²⁺, Be²⁺, Mg²⁺, Ca²⁺, Sr²⁺, Ba²⁺, Sc²⁺, Y²⁺, Ti²⁺, Zr²⁺, V²⁺ , Nb²⁺, Ta²⁺, Cr²⁺, Mo²⁺, W²⁺, Mn²⁺, Re²⁺, Fe²⁺, Ru²⁺, Os²⁺, Rh²⁺, Ir²⁺, Ni²⁺, Pd²⁺, Pt²⁺, Cu²⁺, Ag²⁺, Au²⁺, Cd²⁺, Hg²⁺, B²⁺, Al²⁺, Ga²⁺, In²⁺, Si²⁺, Ge²⁺, Sn²⁺, Pb²⁺, As²⁺, Te²⁺, La²⁺, Ce²⁺, Pr²⁺, Nd²⁺, Sm²⁺, Eu²⁺, Gd²⁺, Tb²⁺, Db²⁺, Tm²⁺, Yb²⁺, and La²⁺. In particular embodiments the metal is a transition metal. In preferred embodiments, the metal is selected from Zn²⁺, Fe²⁺, Co²⁺, and Cu²⁺, in particular the divalent metal is Zn. Consequently, the metal oxide of the first aspect is selected from the group consisting of ZnO, FeO, CoO, and CuO, and the metal hydroxide is selected from the group consisting of Zn(OH)₂, Fe(OH)₂, Co(OH)₂, and Cu(OH)₂. In a particular embodiment the metal is Zn²⁺ and the metal hydroxide is then Zn(OH)₂ In a preferred embodiment the metal is Zn²⁺ and the metal oxide is then ZnO.

The process of the first aspect also requires an imidazole ligand. Imidazole is a fundamental building unit possessing a conjugated five-membered ring system with two N-donor coordination sites. By "imidazole ligand" it is understood an imidazole-containing molecule which is able to bind at least two metal ions through coordination bonds.

In one embodiment, the imidazole ligand is selected from a compound of formula I, a compound of formula II, and a compound of formula III: 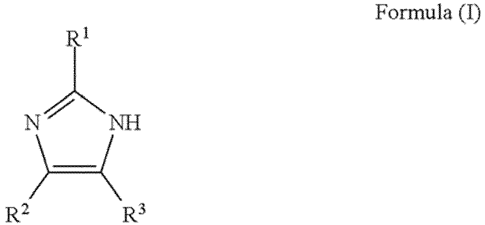 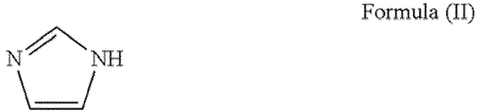 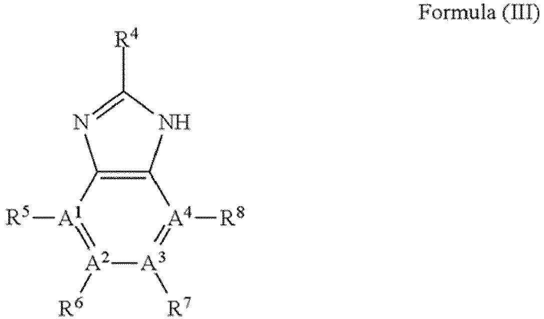
A', A², and A⁴ are each independently C or N;
R¹ is an optionally substituted (C1-C6)alkyl, an optionally substituted (C1-C6)alkenyl, an optionally substituted (C1-C6)alkynyl, halo, nitro, aldehyde, carboxylic acid, amine, amide, cyano, ester, ketone, thiol, alkoxy, hydroxyl;
R²-R⁸ are each independently selected from H, an optionally substituted (C1-C6)alkyl, an optionally substituted (C1-C6)alkenyl, an optionally substituted (C1-C6)alkynyl, halo, nitro, aldehyde, carboxylic acid, amine, amide, cyano, ester, ketone, thiol, alkoxy, and hydroxyl; wherein any of R⁵-R⁸ are absent if bound to A that is a N.

In one embodiment, R¹ is an optionally substituted (C₁-C₃)alkyl, halo, nitro, aldehyde, amine, cyano, thiol, hydroxyl. In one embodiment, R²-R⁸are each independently selected from H, an optionally substituted (C₁-C₃)alkyl, halo, nitro, aldehyde, carboxylic acid, amine, amide, cyano, ester, ketone, thiol, alkoxy, and hydroxyl; wherein R⁵-R⁸ are absent if bound to A that is a N.

In another embodiment, R¹ is an optionally substituted (C₁-C₃)alkyl. In another embodiment, R¹ is methyl. In another embodiment, R¹ is ethyl. In another embodiment, R¹ is propyl. In another embodiment, R²-R⁸ are each independently selected from H and an optionally substituted (C₁-C₃)alkyl. In another embodiment R²-R⁸ are H.

In particular embodiments, the imidazolate ligand is selected from a compound of formula I and a compound of formula II. In preferred embodiments, the imidazolate ligand is selected from the group consisting of imidazole, benzimidazole, 2-methylimidazole, 2-ethylimidazole, and 2-propylimidazole.

In one embodiment, the process is carried out with excess ligand. Excess ligand may improve yield. In a particular embodiment, stoichiometric amounts of the precursors, i.e. the metal oxide and imidazole ligand, are used in the process. This avoids obtaining impurities together with the ZIF product, which is a substantial advantage.

The process of the first aspect also requires a solvent. The term "solvent" relates to individual solvents and also to mixtures of different solvents (solvent system). The solvent can be any aqueous or non-aqueous solvent. In a preferred embodiment, the solvent is selected from the group consisting of water, (C1-C6)-alcohols, (C5-C7)-alkanes, alkenes, (C3-C8)-cycloalkanes, N,N-dimethyl formamide (DMF), *N*,*N*-diethyl formamide (DEF), dimethyl sulfoxide (DMSO), dioxane, chloroform, dichloromethane, diethyl ether, acetonitrile, toluene, benzene, tetrahydrofuran (THF), chlorobenzene, ethylene glycol, and mixtures thereof. Preferred alcohols are methanol, ethanol and isopropanol. Preferred alkanes are hexane, heptane and pentane. In one embodiment the solvent is selected from water, alcohol, and DMF. In another embodiment, the solvent is DMF. In a preferred embodiment the solvent is water. The solvent in the first aspect may also be a solvent system containing more than one of the above solvents, for example, the solvent system may contain two, three or four different solvents. In particular embodiment the solvent system comprises water.

Atomization of the feed solution(s) containing the precursors, i.e. the metal oxide and imidazole ligand, can be considered the central step of spray-drying. There are several ways in which the reagents can be fed to the spray dryer. For instance, a solution comprising both the metal oxide and the imidazole ligand can be sprayed into the spray dryer apparatus in the presence of a solvent. The moment this solution is sprayed into the spray dryer it encounters the gas stream that is flowing through the inside of the spray-dryer, thereby creating a shear field that atomizes the solution into droplets. Thus, in one embodiment, the process comprises spraying a solution containing both the metal oxide and the imidazole ligand into a spray dryer in the presence of a solvent. In this embodiment, the metal oxide and the imidazole ligand are placed in contact in the presence of the solvent before spray drying. This direct injection strategy is straightforward and convenient for precursor solutions that do not undergo any undesired reactions before spray-drying.

However, some precursor solutions are unstable because they contain highly reactive reagents. In these cases, the precursor solutions must be mixed shortly before or immediately after atomization, which can be done by either of two methods: (i) use of T-junction that combines two independently pumped solutions into a single mixed solution that is immediately introduced into the nozzle; or (ii) use of a three-fluid nozzle, which can simultaneously atomize two independent solutions via three concentric channels: one for each liquid solution and one for the gas stream. In this latter configuration, the two solutions are only mixed when they are already atomized via collision of the aerosol droplets in the drying chamber. Thus, in another embodiment, the process of the invention comprises simultaneously spraying two liquid solutions, one containing the metal oxide and another containing the imidazole ligand, into a spray dryer in the presence of a solvent.

Some precursor solutions benefit from a pre-treatment. For example, some precursor solutions can first be activated before they undergo chemical reaction. This can be resolved by a continuous flow-assisted approach, whereby a continuous-flow reactor is coupled to the entrance of the spray dryer. In this embodiment, the precursor solution is pumped and directed into a continuous coil flow reactor encased in a thermostatic oil tank, where it is heated at a certain temperature. Then, the activated solution is automatically injected into the spray-drier. In one embodiment, the precursor solution containing the metal oxide and imidazole ligand is pre-treated before spray drying (pre-spraying activation). Pre-spraying activation may be achieved by incubating the precursor solution with or without heating for a certain amount of time to form Secondary Building Units (SBUs).

By "pre-spraying activation", also herein termed as "pre-treatment" it is meant the process by which the reagents form SBUs before spray-drying. "SBUs" are molecular complexes and cluster entities in which ligand coordination modules and metal coordination environments can be utilized in the transformation of these fragments into extended porous frameworks.

The pre-treatment (pre-spraying activation) may comprise, for example, incubating the precursor solution at a temperature from 10 °C to 150 °C. In another embodiment, the pre-treatment comprises incubating the precursor solution at a temperature from 15 °C to 120 °C. In another embodiment the pre-treatment comprises incubating the precursor solution at a temperature from 15 to 100 °C. In another embodiment the pre-treatment comprises incubating the precursor solution at a temperature from 15 to 80 °C. In another embodiment the pre-treatment comprises incubating the precursor solution at a temperature from 20 to 50 °C. In a particular embodiment the pre-treatment comprises incubating the precursor solution at a temperature from 15 to 40 °C, or from 20 to 30 °C, for example 18 °C, 19 °C, 20 °C, 21 °C, 22 °C, 23 °C, 24 °C, 25 °C, 26 °C, 27 °C, 28 °C, 29 °C, 30 °C, 31 °C, 32 °C, 33 °C, 34 °C, 35 °C, 36 °C, 37 °C, 38 °C, or 39 °C. In a very particular embodiment the pre-treatment comprises incubating at room temperature.

The pre-treatment time may be from 30 min to 5 days. In one embodiment, the pre-treatment time is from 1 h to 4 days. In another embodiment the pre-treatment time is from 3 h to 4 days. In another embodiment the pre-treatment time is from 6 h to 4 days. In another embodiment the pre-treatment time is from 10 h to 4 days. In another embodiment the pre-treatment time is from 18 h to 4 days. In another embodiment the pre-treatment time is from 24 h to 4 days. In another embodiment the pre-treatment time is from 30 h to 4 days. In a particular embodiment the pre-treatment time is from 48 h to 4 days, for example, 72 h. In a very particular embodiment, the pre-treatment is carried out at a temperature from 18 to 25 °C during around 48 to 72 h. In a very particular embodiment, the pre-treatment is carried out at room temperature during around 72 h. The pre-treatment may be preferably performed under some kind of stirring.

In one embodiment, the process of the disclosure also comprises the addition of a base. The synthesis of MOFs may benefit from the presence of a base in the reaction mixture, since the base can further reduce the reaction time and/or the reaction temperature. The base can be sprayed into the spray dryer together with one of the reactants, together with the solvent, it can be simultaneously sprayed through a different nozzle, or a combination thereof. Preferably, the base is not contained in the liquid solution containing both the metal oxide and the ligand. In principle any base can be used in the method of the invention. However, preferred bases are selected from the group consisting of metal alkaline or earth alkaline hydroxides, amines, metal alkaline or earth alkaline carbonates, metal alkaline or earth alkaline acetates, pyridines, azoles, diazines, and mixtures thereof.

Any regular spray dryer can be employed to produce dry crystalline ZIFs according to the first aspect of the disclosure. Preferably, large industrial spray dryers are used. Such industrial spray dryers can produce very large quantities of ZIFs according to the present method in short times. The spray dryer must have as many nozzles as are required for the spraying of the reactants, solvents and, optionally, the base. Usually, air is employed as the hot gas stream, however, other gases can be employed, such as nitrogen. Industrial spray dryers have large capacity drums for product collection. Preferably, the spray dryer drum is coupled to a powder-removing device. The device removes the formed ZIF powder at regular intervals, making place for newly synthesized ZIF, such that the production must not be regularly stopped to empty the drum. Thus, in a particular embodiment, the process for the preparation of a dry crystalline ZIF according to the disclosure is a continuous process.

As mentioned above, the preparation of ZIFs according to the present process can proceed at mild conditions, such that it is particularly appropriate for large-scale industrial production. The reaction temperature inside the spray dryer can be comprised between 20 and 350 °C but, in particular, the temperature is between 50 and 250 °C, more particularly between 60 and 200 °C, more particularly between 80 and 200 °C, more particularly between 100 and 180 °C, and still more particularly between 120 and 180 °C. In a preferred embodiment the temperature inside the spray dryer is around 150 °C.

As mentioned above, the reaction time inside the spray-dryer required for the formation of ZIFs according to the present process is surprisingly short. Usually, the spray-drying time is below 1 hour to obtain the dry product. In most embodiments the spay-drying time to form the dry crystalline ZIF takes from 10 s to 1 h. In particular embodiments the spay-drying is from 10 s to 30 min, or from 10 s to 15 min, or from 20 s to 10 min, or from 20 s to 5 min, or from 10 s to 2 min, or from 10 s to 1 min, or from 10 s to 40 s, or from 10 s to 30 s.

The person skilled in the art is aware that the reaction parameters may need some adjustments for each ZIF product and/or each spray-dryer. The reaction parameters may also vary depending on whether a pre-treatment is carried out. For instance, reagent concentrations, choice of solvent, choice of base, gas spray flow, drying gas flow, feed flow and temperature, among others, are parameters that may be adjusted. The required adjustments are within the knowledge of the skilled person.

The dry crystalline ZIF obtained by the above process may be activated (post-spraying activation). Siad activation of the crystalline ZIF may be achieved by thermal treatment. In one embodiment, the obtained ZIF is activated at a temperature from 100 to 200 °C. In another embodiment the obtained ZIF is activated at a temperature from 120 to 180 °C. In another embodiment the obtained ZIF is activated at a temperature from 130 to 170 °C. In another embodiment the obtained ZIF is activated at a temperature from 140 to 160 °C. In a preferred embodiment the obtained ZIF is activated at a temperature around 150 °C.

As outlined above, the process disclosed herein directly provides dry crystalline ZIFs without the need of washing steps and subsequent filtration. Said ZIF crystals have a high purity grade. Nevertheless, they can be subjected to further purification steps. Thus, in one embodiment, the process of the invention additionally comprises a purification step. Usually, this purification step comprises washing the ZIF crystals with an appropriate solvent and drying. This purification step is also known as "extraction step" because it removes the solvent or other molecules that are retained in ZIF pores. By washing the porous material with an appropriate solvent, the new solvent molecules replace whatever molecules had remained in the pores and are subsequently removed by a gentle evaporation process. The solvent used for extraction can be identical to or different from that used for the reaction of the at least one metal ion with the at least one organic ligand which is at least bidentate. As non-limiting suitable solvents for the purification or extraction step the following can be mentioned: water, methanol, ethanol, isopropanol, heptane, hexane, pentane, cyclohexane, alkenes, DMF, DEF, DMSO, dioxane, chloroform, dichloromethane, diethyl ether, acetonitrile, toluene, benzene, THF, chlorobenzene, ethylene glycol, and mixtures thereof.

Any ZIF can be prepared following the present process with relatively high purity and good yield. The examples below show the production of ZIF-8, but this does not limit the scope of the present disclosure. As skilled person would indeed acknowledge that other ZIFs may be obtained by the process of the invention. In one embodiment, the ZIF prepared by the process of the present disclosure is selected from the group consisting of ZIF-8, ZIF-4, ZIF-7, ZIF-14, ZIF-c, ZIF-67, and MAF-6.

A second aspect of the present disclosure refers to a dry crystalline ZIF obtainable by the process of the first aspect. All embodiments and examples defined above for the first aspect also apply to the second aspect.

The dry ZIF crystals obtained by the present process often have particularly small dimensions. In one embodiment the ZIF crystals have a size ranging between 0.01 and 100 µm. In another embodiment, the size of the obtained ZIF crystals is between 0.01 to 1 µm. Additionally, the present process can yield ZIF crystals in the form of spherical microcapsules, which are maintained after the purification step. Such ZIF capsules can be obtained by employing low reactant concentrations. Thus, in a particular embodiment the obtained crystalline ZIF product is in the form of spherical microcapsules.

The ZIF may be subjected to post-synthetic modifications, in particular to covalent post-synthetic modifications. Covalent post-synthetic modification (PSM) involves an organic reaction carried out on the organic linker while maintaining the ZIF integrity and may be desirable in order to introduce a chemical functionality, for example, an amine, aldehyde or carboxy functional group. In one embodiment, the covalent post-synthetic modification of the ZIF is carried by spray drying a ZIF and a reagent in the presence of a solvent under conditions appropriate for forming a covalent bond between the ZIF and the reagent.

The ZIF material obtained by the present process can be used as such or it can be transformed into a shaped body. In shaped body production, the ZIF can be mixed with further materials, such as, for example, binders, lubricants or other additives, which are added during the production. Likewise, the shaped body may comprise further components such as, for example, adsorbents, such as activated carbon. For the production of these shaped bodies, in principle all suitable methods are possible. Non-limiting methods for producing shaped bodies are:
a) Kneading/pan-grinding the framework material alone or together with at least one binder and/or at least one pasting agent and/or at least one template compound to obtain a mixture; shaping the resultant mixture by means of at least one suitable method such as, for example, extrusion; optionally washing and/or drying and/or calcining the extrudate; and optionally final processing.
b) Tableting or pelleting together with at least one binder and/or other aid.
c) Applying the framework material to at least one porous support material if appropriate.

The resultant material can then be further processed in accordance with the above-described method to give a shaped body.

The method according to the first aspect may also be used to prepare composite materials comprising ZIF. "Composite material" is understood, as commonly in the art, as a material made from two or more constituent materials with significantly different physical or chemical properties that, when combined, produce a material with characteristics different from the individual components. The individual components remain separate and distinct within the finished structure.

Thus, the present disclosure also provides a process for the preparation of a ZIF-containing composite material, said process comprising:
a) spray drying a metal oxide, an imidazole ligand, and a further component in the presence of a solvent, wherein the reaction of the metal oxide with the imidazole ligand and the further component to yield the ZIF-containing composite and the drying of the obtained ZIF-containing composite takes place simultaneously inside the spray dryer, and
c) collecting the dry composite.

The further selected component is not limited. In some embodiments, the further component is an organic or inorganic functional nanomaterial, such as quantum dots, nanoparticles, nanorods, etc. For example, composites can be produced comprising metal or metal oxide nanoparticles and ZIFs by the present process. For example, metal nanoparticles (MeNP) may be spray-dried together with the ZIF precursors (metal oxide and imidazole ligand) in the presence of a solvent to yield ZIF-covered MeNPs (MeNP@ZIF). The metal nanoparticles, such as Au, Ag, Pt, Cu, Pd, Re, Zn, Ru, Co, Cd, Al, Ni, or Fe NPs, can be prepared by method known to the skilled person. The combination of ZIFs according to the present disclosure and functional components offers a possibility to generate synergetic effect between functional units, thus leading to the creation of multifunctional materials with performance superior to each individual components.

The present disclosure also refers to ZIF-containing composites or shaped bodies. Further disclosed are ZIF-containing composites or shaped bodies obtained as defined above.

The ZIF obtained by the process of the invention, and/or the shaped bodies and/or composites obtained thereof, can be used for any use in which a highly porous material is needed. Typical uses for ZIFs are taking up of at least one substance for its storage, ionexchange, sensor and separation of substances. Preferably, the at least one substance is a gas, still more preferably, the gas is selected from hydrogen, carbon dioxide, and hydrocarbon. The obtained ZIFs and/or the shaped bodies and/or composites obtained thereof can also be used for encapsulation and controlled release of chemical substances and catalysis. Further, the obtained ZIFs and/or the shaped bodies and/or composites obtained thereof can be used for drug delivery, as contrast agents, for air purification, particularly VOC adsorption, for controlled release of active ingredients, or as supercapacitor electrode materials.

Throughout the description and claims the word "comprise" and variations of the word, are not intended to exclude other technical features, additives, components, or steps. Furthermore, the word "comprise" encompasses the case of "consisting of". Additional objects, advantages and features of the invention will become apparent to those skilled in the art upon examination of the description or may be learned by practice of the invention. The following examples are provided by way of illustration, and they are not intended to be limiting of the present invention. Furthermore, the present invention covers all possible combinations of particular and preferred embodiments described herein.

### Examples

### Industrial scale preparation of ZIF-8

The following experiment was conducted at room temperature. Stoichiometric amounts of ZnO (16 Kg, SILAR) and 2-methylimidazole (32 Kg, ACETO) were aged in water (200 L) for 72 hours with continuous stirring. The resulting dispersion was then directly spray-dried using an industrial-scale spray dryer (GEA surmesure) in a hot chamber at 150 °C. Spay-drying conditions: nozzle mono fluid SDX 35; Pressure = 7 bar for 36-38kg/h; Inlet temperature = 225°C; Oulet temperature = 115°C; Flow : 1600Nm3/h N2. The resulting powder was activated at 150 °C without undergoing further filtration or redispersion. ZIF-8 was obtained with this process at a yield of 95%. The resulting specific surface area of the ZIF-8 powder reaches BET=1700 m2/g.

### Citation List

EP2764004

## Claims

1. A process for the preparation of a dry crystalline zeolitic imidazolate framework (ZIF) which comprises:
a) spray drying a metal oxide and an imidazole ligand in the presence of a solvent, wherein the reaction of the metal oxide with the imidazole ligand to yield the ZIF and the drying of the obtained ZIF take place simultaneously inside the spray dryer, and
b) collecting the formed dry crystalline ZIF.

2. The process according to claim 1, wherein the imidazole ligand is selected from a compound of formula I, a compound of formula II, and a compound of formula III: 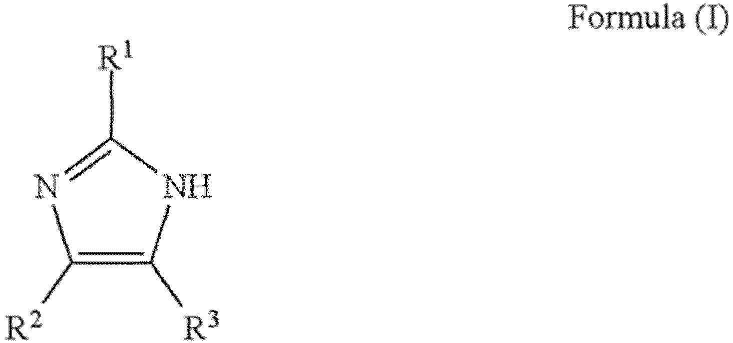 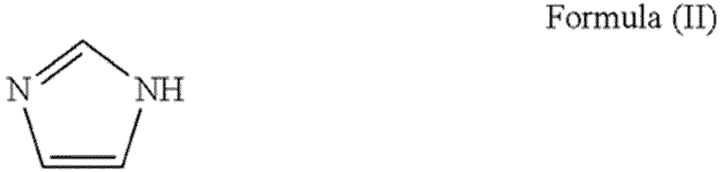 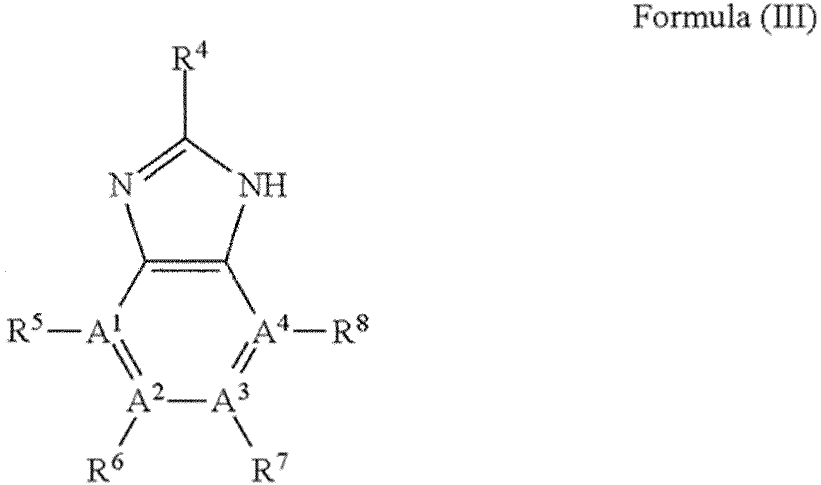 wherein,
A¹, A², and A⁴ are each independently C or N;
R¹ is an optionally substituted (C1-C6)alkyl, an optionally substituted (C1-C6)alkenyl, an optionally substituted (C1-C6)alkynyl, halo, nitro, aldehyde, carboxylic acid, amine, amide, cyano, ester, ketone, thiol, alkoxy, hydroxyl;
R²-R⁸ are each independently selected from H, an optionally substituted (C1-C6)alkyl, an optionally substituted (C1-C6)alkenyl, an optionally substituted (C1-C6)alkynyl, halo, nitro, aldehyde, carboxylic acid, amine, amide, cyano, ester, ketone, thiol, alkoxy, and hydroxyl; wherein any of R⁵-R⁸ are absent if bound to A that is a N.

3. The process according to claim 2, wherein the imidazole ligand is selected from a compound of formula I and a compound of formula II.

4. The process according to claim 2, wherein the imidazole ligand is selected from the group consisting of imidazole, benzimidazole, 2-methylimidazole, 2-ethylimidazole, and 2-propylimidazole.

5. The process according to any one of claims 1-4, wherein the metal is a divalent metal, in particular, a divalent metal selected from the group consisting of Zn²⁺, Co²⁺, Be²⁺, Mg²⁺, Ca²⁺, Sr²⁺, Ba²⁺, Sc²⁺, Y²⁺, Ti²⁺, Zr²⁺, V²⁺, Nb²⁺, Ta²⁺, Cr²⁺, Mo²⁺, W²⁺, Mn²⁺, Re²⁺, Fe²⁺, Ru²⁺, Os²⁺, Rh²⁺, Ir²⁺, Ni²⁺, Pd²⁺, Pt²⁺, Cu²⁺, Ag²⁺, Au²⁺, Cd²⁺, Hg²⁺, B²⁺, Al²⁺, Ga²⁺, In²⁺, Si²⁺, Ge²⁺, Sn²⁺, Pb²⁺, As²⁺, Te²⁺, La²⁺, Ce²⁺, Pr²⁺, Nd²⁺, Sm²⁺, Eu²⁺, Gd²⁺, Tb²⁺, Db²⁺, Tm²⁺, Yb²⁺, and La²⁺.

6. The process according to claim 5, wherein the divalent metal is selected from Zn²⁺, Fe²⁺, Co²⁺, and Cu²⁺, in particular, the divalent metal is Zn²⁺.

7. The process according to any of claims 1-6, wherein the solvent is selected from the group consisting of water, methanol, ethanol, isopropanol, *N*,*N*-dimethyl formamide, N,N-diethyl formamide, dimethyl sulfoxide dioxane, chloroform, dichloromethane, diethyl ether, acetonitrile, toluene, benzene, tetrahydrofuran, chlorobenzene, ethylene glycol, hexane, pentane, and combinations thereof, in particular, wherein the solvent is water or a solvent system comprising water.

8. The process according to any of the claims 1-7, wherein the metal oxide and the imidazole ligand are placed in contact in the presence of the solvent before spray drying.

9. The process according to claim 8, wherein the metal oxide, imidazole ligand and solvent are incubated at a temperature comprised from 10 °C to 150 °C during a time comprised from 20 s to 5 days, in particular, incubated at a temperature comprised from 15 °C to 40 °C during a time comprised from 1 to 4 days.

10. The process according to any one of claims 1-9, wherein stoichiometric amounts of the metal oxide and the imidazole ligand are used.

11. The process according to any of the claims 1-10, wherein the spray-drying is carried out at a temperature from 80 to 200 °C, in particular around 150 °C.

12. The process according to any of the claims 1-11, further comprising heating the obtained dry crystalline ZIF at a temperature from 100 to 200 °C, in particular from 125 to 160 °C.

13. The process according to any one of claims 1-12, wherein the ZIF is selected from the group consisting of ZIF-8, ZIF-4, ZIF-7, ZIF-14, ZIF-67, ZIF-c, and MAF-6.

14. A dry crystalline ZIF obtainable by a process as defined in any one of claims 1-13.

15. A composite material or shaped body comprising a dry crystalline ZIF as defined in claim 14.
